# NEUE EUROPÄISCHE PATENTSCHRIFT

(11) **EP 1 013 514 B2**
(45) Veröffentlichungstag und Bekanntmachung des Hinweises auf die Entscheidung über den Einspruch: **21.02.2007**
(45) Hinweis auf die Patenterteilung: 06.08.2003
(21) Anmeldenummer: 99125106.7
(22) Anmeldetag: 16.12.1999
(51) Int. Cl.: B60R 21/16

(54) **Luftsack**
Air bag
Sac de sécurité gonflable

(30) Priorität: 18.12.1998 DE 19858690
(43) Veröffentlichungstag der Anmeldung: 28.06.2000
(73) Patentinhaber: Delphi Technologies, Inc., Troy, MI 48007 (US)
(72) Erfinder: Varcus, Johannes, 58332 Schwelm (DE); Nilson, Gert, 42369 Wuppertal (DE); Zimmerbeutel, Bernd, 42857 Remscheid (DE); Conlee, James Kent, Dayton, Ohio 45426-1135 (US)
(74) Vertreter: Manitz, Finsterwald & Partner GbR

(56) Entgegenhaltungen:
- EP-B- 0 422 840
- DE-A- 4 121 659
- GB-A- 2 265 118
- JP-A- 8 216 814
- JP-A- 9 263 204
- JP-A- 10 166 978
- JP-A- 10 226 294
- US-A- 5 172 933
- US-A- 5 249 824
- US-A- 5 573 270

## Beschreibung

Die vorliegende Erfindung betrifft einen Luftsack gemäß dem Oberbegriff des Anspruchs 1, der zur Anbindung an einen Gasgenerator mit einem Luftsackmund versehen ist.

Die JP 10-226294 offenbart einen Luftsack nach dem Oberbegriff des Anspruchs 1. Ein Luftsack dieser Art dient zum Schutz von Fahrzeuginsassen bei einem Unfall. Bei Zünden des Gasgenerators strömt Gas durch den Luftsackmund in das Luftsackinnere, so dass sich dieser entfaltet und ein Polster für den Fahrzeuginsassen bildet. Hierbei wird angestrebt, dass sich der Luftsack nicht primär in Richtung auf den Fahrzeuginsassen, sondern möglichst seitlich bzw. radial entfaltet, um ungewollte Verletzungen beim Entfalten des Luftsackes auszuschließen.

Es ist die Aufgabe der vorliegenden Erfindung, einen Luftsack nach dem Oberbegriff des Anspruchs 1 zu schaffen, der sich weitgehend, aber nicht ausschließlich, seitlich bzw. radial entfaltet, und dabei dennoch einfach und kostengünstig herstellbar ist.

Die Lösung dieser Aufgabe erfolgt ausgehend vom Oberbegriff des Anspruchs 1 durch die kennzeichnenden Merkmale des Anspruchs 1. Der Luftsack entfaltet sich zunächst im Wesentlichen seitlich bzw. radial, während ein Teil des Gases nicht abgelenkt wird und nach vorne strömt, so dass nachströmendes Gas die Luftsackhülle nicht übermäßig in Richtung des Fahrzeuginsassen verformt, aber der Luftsack dennoch schnell entfaltet wird.

Vorteilhafte Ausführungsformen der Erfindung sind in der Beschreibung, den Figuren sowie den Unteransprüchen beschrieben.

Nach einer ersten vorteilhaften Ausführungsform kann die vordere Austrittsöffnung einen geringeren Querschnitt als eine der seitlichen Austrittsöffnungen aufweisen.

Eine besonders vorteilhafte Ausführungsform ergibt sich dadurch, dass die beiden Gewebeteile entlang ihres Umgangs miteinander zumindest teilweise verbunden sind, wobei ein Gewebeteil oder beide Gewebeteile den Luftsackmund zumindest teilweise umgeben. Die beiden Gewebeteile können beispielsweise miteinander entlang ihres Außenumfangs vernäht werden, wobei entsprechende seitliche und vordere Austrittsöffnungen zwischen den beiden Gewebeteilen gebildet werden.

Gemäß einer nicht in den Schutzbereich der vorliegenden Erfindung fallenden Variante ist als Umlenkeinrichtung ein weiterer (kleinerer) Luftsack vorgesehen, der im Inneren des ersten Luftsackes angeordnet und mit seitlichen Gasaustrittsöffnungen versehen ist. Bei dieser Variante wird das von dem Gasgenerator erzeugte Gas zunächst in den ersten Luftsack eingelassen, in diesem seitlich abgelenkt und strömt anschließend in den eigentlichen Luftsack.

Nachfolgend wird die vorliegende Erfindung rein beispielhaft anhand einer vorteilhaften Ausführungsform unter Bezugnahme auf die beigefügten Zeichnungen beschrieben. Es zeigen:
Fig. 1 eine schematische Darstellung eines nicht in den Schutzbereich der Erfindung fallenden Luftsackes in einer perspektivischen und einer seitlichen Ansicht; und
Fig. 2 Ansichten, die denen von Fig. 1 entsprechen und die einen erfindungsgemäßen Luftsack betreffen.

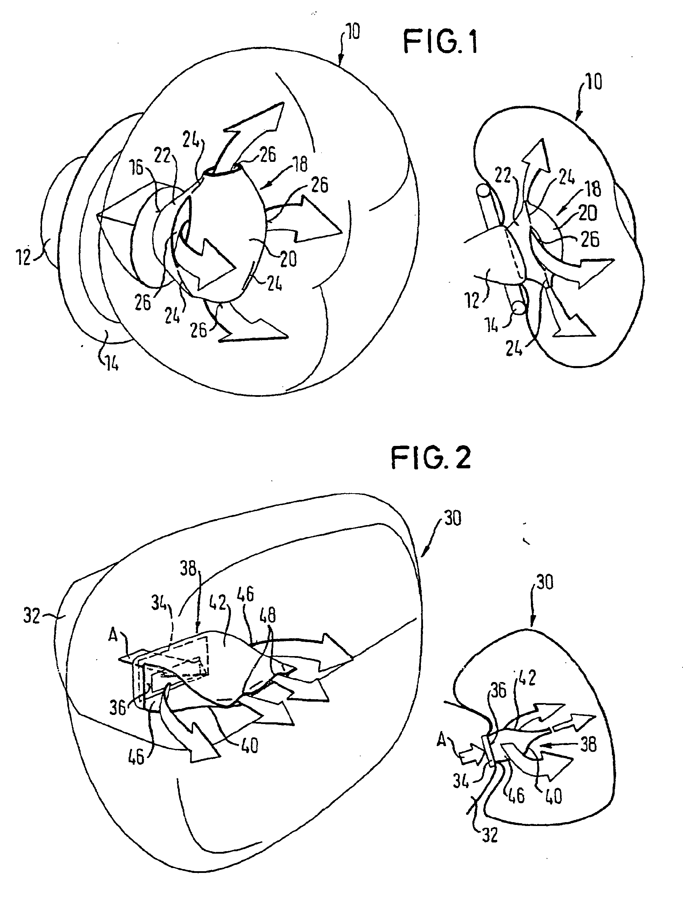

Fig. 1 zeigt einen Fahrerluftsack 10, der in einem Lenkrad 14 untergebracht ist, das an einer Lenksäule 12 befestigt ist. Der Luftsack 10 ist im nicht entfalteten Zustand in einem Luftsackmodul untergebracht, das ein Gehäuse und einen Gasgenerator aufweist (in den Figuren nicht dargestellt).

Der in Fig. 1 dargestellte Luftsack 10 weist eine im Wesentlichen zylinderabschnittförmige Außenkontur auf, wobei in einer Stirnfläche des Zylinders ein Luftsackmund 16 gebildet ist, durch den das von dem Gasgenerator erzeugte Gas in das Luftsackinnere einströmt.

Im Inneren des Luftsackes 10 ist im Bereich des Luftsackmundes 16 eine Umlenkeinrichtung 18 vorgesehen, die den aus dem Luftsackmund 16 austretenden Gasstrom seitlich umlenkt. Mit anderen Worten kann das aus dem Luftsackmund 16 austretende Gas nicht direkt in Richtung der vorderen Stirnfläche des Luftsackes strömen. Vielmehr wird der Gasstrom zunächst seitlich abgelenkt oder umgelenkt, was durch entsprechende Pfeile angedeutet ist.

Bei diesem Luftsack, der nicht Gegenstand der vorliegenden Erfindung ist, ist die Umlenkeinrichtung 18 dadurch gebildet, dass ein Gewebeteil 20 auf ein Hitzeschild 22 aufgenäht ist, das ebenfalls als Gewebeteil ausgebildet ist und das den Luftsackmund 16 kreisförmig umgibt. In Draufsicht ist das Hitzeschild 22 im Wesentlichen kreisförmig ausgebildet, wobei zentral in der Mitte eine kreisförmige Durchtrittsöffnung für den Gasstrom gebildet ist. Das Gewebeteil 20 ist in Draufsicht ebenfalls im wesentlichen kreisförmig ausgebildet, wobei das Gewebeteil 20 und das Hitzeschild 22 durch Nähte 24 so miteinander verbunden sind, dass seitliche Austrittsöffnungen 26 zwischen dem Gewebeteil 20 und dem Hitzeschild 22 frei bleiben.

Fig. 2 zeigt eine Ausführungsform eines Luftsacks gemäß der Erfindung, der als Beifahrerairbag ausgebildet ist. Der in Fig. 2 dargestellte Luftsack 30 ist beispielsweise im Bereich einer Armaturentafel 32 in einem Luftsackmodul angeordnet, das ein Gehäuse und einen Gasgenerator (jeweils nicht dargestellt) aufweist. Die vordere Stirnseite des Gehäuses ist in Fig. 2 angedeutet und mit dem Bezugszeichen 34 versehen.

Der in Fig. 2 dargestellte Luftsack 30 besitzt im aufgeblasenen Zustand eine im Wesentlichen quaderförmige Außenkontur, wobei an der Rückseite des Luftsackes ein Luftsackmund 36 gebildet ist, durch den das von dem Gasgenerator erzeugte Gas in das Luftsackinnere strömen kann.

Im Inneren des Luftsacks 30 ist eine Umlenkeinrichtung 38 vorgesehen, die einen aus dem Luftsackmund 36 austretenden Gasstrom zumindest teilweise seitlich umlenkt. Wie durch Pfeile angedeutet ist, wird der überwiegende Teil des Gasstromes seitlich umgelenkt, d.h. in eine Richtung umgelenkt, die quer zu der vom Gasgenerator erzeugten Ausströmungsrichtung der Gase verläuft, die durch einen Pfeil A angedeutet ist.

Bei diesem Ausführungsbeispiel ist die Umlenkeinrichtung 38 dadurch gebildet, dass zwei Gewebeteile 40 und 42, die normalerweise als Hitzeschild dienen, an insgesamt drei Stellen miteinander vernäht sind. Die Gewebeteile 40 und 42 weisen in Draufsicht eine im Wesentlichen rechteckige Form auf und sind jeweils an einer Längskante mit der oberen bzw. der unteren Kante der Stirnseite 34 des Gehäuses (nicht dargestellt) verbunden. An ihren freien Längskanten sind die beiden Gewebeteile 40 und 42 miteinander vernäht, wobei an den freien Ecken jeweils eine Naht und in der Mitte der freien Längskante eine weitere Naht vorgesehen ist.

Zwischen diesen Nähten sind jeweils vordere Austrittsöffnungen 48 gebildet. Seitlich bilden sich zwischen den Gewebeteilen 40 und 42 seitliche Austrittsöffnungen 46. Wie Fig. 2 zeigt, weist jede vordere Austrittsöffnung 48 einen geringeren Querschnitt als eine der seitlichen Austrittsöffnungen 46 auf.

Wie die Fig. 2 zeigt, wird beim Austritt des Gasstromes aus dem Gasgenerator die Richtung des Gasstromes teilweise seitlich bzw. radial abgelenkt, so dass der Gasstrom nicht vollständig in Richtung des Fahrzeuginsassen, sondern teilweise quer dazu strömt. Hierdurch wird der Gassack zunächst überwiegend quer entfaltet, so dass eine Verletzung des Fahrzeuginsassen minimiert ist.

### Bezugszeichenliste

- 10: Luftsack
- 12: Lenksäule
- 14: Lenkrad
- 16: Luftsackmund
- 18: Umlenkeinrichtung
- 20: Gewebeteil
- 22: Hitzeschild
- 24: Naht
- 26: Austrittsöffnung
- 30: Luftsack
- 32: Armaturentafel
- 34: Stirnseite
- 36: Luftsackmund
- 40: Gewebeteil
- 42: Gewebeteil
- 46: Austrittsöffnung
- 48: Austrittsöffnung
- A: Gasstrom

## Patentansprüche

1. Luftsack, der zur Anbindung an einen Gasgenerator mit einem Luftsackmund (36) versehen ist, wobei im Inneren des Luftsackes (30) im Bereich des Luftsackmundes (36) eine Umlenkeinrichtung (38) vorgesehen ist, die einen aus dem Luftsackmund (36) austretenden Gasstrom zumindest teilweise seitlich umlenkt, wobei ein im Inneren des Luftsackes (30) und im Bereich des Luftsackmundes (36) vorgesehenes Hitzeschild (40, 42) aus einem Gewebeteil besteht, und die Umlenkeinrichtung (38) **dadurch** gebildet ist, dass das Gewebeteil mit einem weiteren Gewebeteil (42, 40) durch Nähte verbunden ist, und wobei zwischen den Gewebeteilen (40, 42) seitliche Austrittsöffnungen (46) vorgesehen sind
**dadurch gekennzeichnet,**
**dass** zwischen den Nähten und zwischen den beiden Gewebeteilen (40, 42) zumindest eine Austrittsöffnung (48) gebildet ist, die in Richtung der vom Gasgenerator erzeugten Ausströmrichtung der Gase liegt.

2. Luftsack nach Anspruch 1,
**dadurch gekennzeichnet,**
**dass** die vordere Austrittsöffnung (48) einen geringeren Querschnitt als eine der seitlichen Austrittsöffnungen (46) aufweist.

3. Luftsack nach Anspruch 1,
**dadurch gekennzeichnet,**
**dass** als Umlenkeinrichtung die beiden Gewebeteile (40, 42) entlang ihres Umfangs miteinander zumindest teilweise verbunden sind, wobei ein Gewebeteil (40, 42) oder beide Gewebeteile (40,42) den Luftsackmund (36) zumindest teilweise umgeben.

4. Luftsackmodul mit einem Gasgenerator, der mit einem Luftsack (30) nach einem der vorstehenden Ansprüche verbunden ist.

## Claims

1. An air-bag provided with an airbag mouth (36) for connecting to a gas generator, wherein a deflection device (38) is provided in the interior of the airbag (30) in the region of the airbag mouth (36) and at least partially laterally deflects a gas stream discharged from the airbag mouth (36), wherein a heat shield (40, 42) provided in the interior of the airbag (30) and in the region of the airbag mouth (36) consists of a fabric part and the deflection device (38) is formed in that the fabric part is connected by seams to a further fabric part (42, 40) and wherein lateral discharge openings (46) are provided between the fabric parts (40, 42),
**characterized in that**
at least one discharge opening (48), which is disposed in the direction of the outflow direction of the gases generated by the gas generator, is formed between the seams and between the two fabric parts (40, 42).

2. An airbag in accordance with claim 1, **characterized in that** the front discharge opening (48) has a smaller cross-section than one of the lateral discharge openings (46).

3. An airbag in accordance with claim 1, **characterized in that** the two fabric parts (40, 42) are mutually connected at least partly along their periphery as the deflection device, wherein one fabric part (40, 42) or both fabric parts (40, 42) at least partly surround the airbag mouth (36).

4. An airbag module having a gas generator which is connected to an airbag (30) in accordance with any one of the preceding claims.

## Revendications

1. Coussin de sécurité gonflable pourvu d'une embouchure (36) de coussin de sécurité gonflable en vue d'être relié à un générateur de gaz, un dispositif de renvoi (38) étant prévu à l'intérieur du coussin de sécurité gonflable (30), à proximité de l'embouchure (36) du coussin gonflable, déviant un flux de gaz sortant de l'embouchure (36) du coussin gonflable au moins partiellement vers les côtés, un bouclier thermique (40, 42) prévu à l'intérieur du coussin de sécurité gonflable (30), à proximité de l'embouchure (36) de ce coussin gonflable, étant composé d'une pièce de tissu, et le dispositif de renvoi (38) étant constitué grâce au fait que la pièce de tissu est reliée à une autre pièce de tissu (42, 40) par l'intermédiaire de coutures, et des ouvertures de sortie latérales (46) étant formées entre les pièces de tissu (40, 42), **caractérisé en ce qu'**au moins une ouverture de sortie (48) est formée entre les pièces de tissu (40, 42), et est orientée dans la direction d'échappement des gaz qui est générée par le générateur de gaz.

2. Coussin de sécurité gonflable selon la revendication 1, **caractérisé en ce que** l'ouverture de sortie frontale (48) présente une section transversale plus petite que celle de l'une des ouvertures de sortie latérales (46).

3. Coussin de sécurité gonflable selon la revendication 1, **caractérisé en ce que**, pour former le dispositif de renvoi, les deux pièces de tissu (40, 42) sont au moins partiellement reliées l'une à l'autre le long de leur périphérie, l'une des pièces de tissu (40, 42), ou les deux pièces de tissu (40, 42), entourant au moins partiellement l'embouchure (36) du coussin de sécurité gonflable.

4. Coussin de sécurité gonflable muni d'un générateur de gaz relié à un coussin de sécurité gonflable (30) selon l'une des revendications précédentes.
